Europäisches Patentamt

European Patent Office

Office européen des brevets

(19)

(11) Numéro de publication : **0 282 375 B1**

(12) **FASCICULE DE BREVET EUROPEEN**

(45) Date de publication du fascicule du brevet :
**25.03.92 Bulletin 92/13**

(51) Int. Cl.⁵ : **H02K 49/04, F16C 19/56**

(21) Numéro de dépôt : **88400322.9**

(22) Date de dépôt : **12.02.88**

(54) **Perfectionnements aux ralentiseurs à courants de foucault pour véhicules.**

(30) Priorité : **16.02.87 FR 8701937**

(43) Date de publication de la demande :
**14.09.88 Bulletin 88/37**

(45) Mention de la délivrance du brevet :
**25.03.92 Bulletin 92/13**

(84) Etats contractants désignés :
**AT BE CH DE ES GB IT LI NL SE**

(56) Documents cités :
**FR-A- 1 492 315
FR-A- 2 287 128
FR-A- 2 293 100
GB-A- 2 034 534
US-A- 2 683 066
US-A- 4 398 111**

(73) Titulaire : **LABAVIA S.G.E.
5, avenue Newton Parc d'Activités
F-78391 Montigny le Bretonneux (FR)**

(72) Inventeur : **Charbonnier, Marc
25, rue Jean Lurçat
F-95130 Franconville (FR)**
Inventeur : **Durand, Michel
2, rue du Ponceau
F-95000 Cergy Pontoise (FR)**

(74) Mandataire : **Behaghel, Pierre
CABINET PLASSERAUD 84 rue d'Amsterdam
F-75009 Paris (FR)**

## Description

L'invention est relative aux ralentisseurs électriques ou à courants de Foucault pour véhicules et en particulier à ceux qui comprennent :

– un stator inducteur comportant lui-même une couronne de bobines électriques d'axes parallèles à l'axe du ralentisseur, portées par une ossature annulaire,

– et un rotor induit comportant deux disques en matériau magnétique qui encadrent axialement la couronne de bobines et qui sont reliés tous les deux, par des couronnes de bras coudés, à une collerette centrale elle-même solidarisée angulairement avec un tronçon de l'arbre de transmission à ralentir du véhicule.

L'invention concerne plus particulièrement encore, parmi les ralentisseurs considérés, ceux pour lesquels l'ossature annulaire comprend une douille centrale pénétrant dans le rotor, des bras radiaux prolongeant extérieurement cette douille, un anneau porté par ces bras et supportant les bobines, et des portées permettant la fixation de l'ossature sur le châssis du véhicule, en particulier sur des longerons disposés horizontalement de part et d'autre du ralentisseur, parallèlement à son axe, le susdit tronçon d'arbre à ralentir étant monté à l'intérieur de la douille par l'intermédiaire de deux roulements.

Dans les constructions connues de ce genre, qui ont été décrites dans le brevet France n° 1 573 051 de la demanderesse, les deux roulements sont des roulements coniques identiques montés avec des inclinaisons opposées et ces roulements sont juxtaposés axialement au milieu de l'étendue axiale de la douille, d'allure générale cylindrique ; de plus le rotor est monté en porte-à-faux par rapport à l'ensemble des deux roulements.

Ces constructions n'ont guère donné satisfaction dans la pratique, en particulier au plan de la robustesse et de la stabilité du rotor, notamment pour la création des couples de ralentissement élevés.

L'invention a pour but, surtout, de rendre les ralentisseurs du genre considéré tels qu'ils remédient à ces inconvénients.

A cet effet, les ralentisseurs du genre en question selon l'invention sont essentiellement caractérisés en ce que leur douille présente une allure générale tronconique, en ce que la collerette centrale de leur rotor est raccordée au tronçon d'arbre par un pot à paroi latérale cylindrique coiffant l'extrémité étroite de la douille et en ce que les deux roulements logés dans cette douille sont un roulement relativement petit disposé au voisinage de ladite extrémité étroite de la douille, à l'intérieur de l'ensemble pot-collerette, et un roulement relativement gros propre à encaisser les efforts axiaux et disposé au voisinage de l'extrémité évasée de la douille.

Dans des modes de réalisation préférés, on a recours en outre à l'une et/ou à l'autre des dispositions suivantes :

– le gros roulement fait saillie axialement au-delà de l'encombrement axial du rotor,

– les deux roulements sont disposés dans une même poche à graisse fermée par deux joints d'étanchéité montés dans les deux extrémités de la douille.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

La figure 1, de ces dessins, montre en coupe axiale un ralentisseur électrique de véhicule établi selon l'invention, ainsi que le bout d'arbre sur lequel sont appliqués les couples de ralentissement.

La figure 2 montre en vue en bout un composant du stator de ce ralentisseur et quelques éléments permettant de monter ce composant sur un châssis de véhicule.

D'une façon connue en soi, le ralentisseur considéré comprend un stator inducteur et un rotor induit.

Le stator comprend :

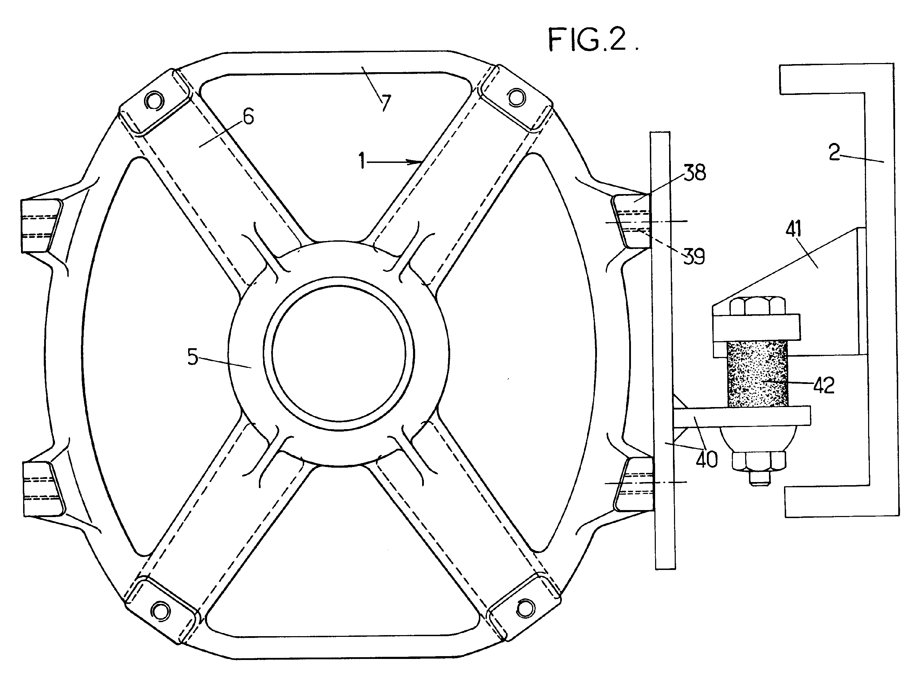

– une ossature 1 destinée à être fixée sur le châssis du véhicule, et plus précisément sur deux longerons parallèles 2 (figure 2) constitutifs de ce châssis,

– et une couronne de bobines électriques 3 portées par cette ossature, chaque bobine entourant un noyau magnétique prolongé à ses deux extrémités par des épanouissements polaires 4, ce qui forme deux couronnes de poles magnétiques à polarités alternées de proche en proche.

L'ossature 1 comprend elle-même une douille centrale 5 prolongée à l'une de ses extrémités axiales par des bras radiaux 6, les extrémités de ces bras étant reliées entre elles par un cerceau 7, et ce cerceau supporte un anneau 8 lui-même traversé par les noyaux des bobines 3.

L'anneau 8, dont le rebord périphérique est rabattu axialement à la façon du bord d'une cuvette, est monté sur le cerceau 7 à l'aide de boulons 9, de manchons de renfort 10 et de rondelles de calage 11.

Le rotor comprend, quant à lui :

– deux disques 12 en matériau magnétique destinés à être les sièges des courants de Foucault, montés de façon à pouvoir défiler respectivement en regard des deux couronnes de pôles inducteurs, à une petite distance axiale de ceux-ci formant entrefer, chaque disque étant solidarisé avec une bague de fixation 13 par l'intermédiaire d'une couronne de bras 14 coudés aussi bien axialement que transversalement, bras constituant des ailettes de ventilation,

– et une collerette centrale 15 sur laquelle sont fixées par boulonnage les deux bagues 13, collerette elle-même solidarisée, par l'intermédiaire d'une pièce annulaire 16, avec un bout d'arbre 17 faisant partie de l'arbre de transmission à ralentir du véhicule considéré.

La solidarisation angulaire entre le bout d'arbre 17 et la pièce annulaire 16 est assurée par la coopération de cannelures complémentaires 18.

Le bout d'arbre 17 est supporté et guidé par deux roulements 19 et 20 logés dans la douille 5.

Pour réduire au maximum le porte-à-faux du montage du rotor, il convient que l'un de ces roulements de portage se trouve le plus possible "enfoncé axialement" vers l'intérieur de ce rotor, bien que le diamètre de l'espace intérieur disponible pour recevoir ce roulement soit relativement petit.

Il convient également que l'un au moins des deux roulements constitue une butée axiale robuste pour résister aux charges axiales très élevées qui sont appliquées sur l'arbre de transmission du véhicule, et donc sur le bout d'arbre 17, par les débattements du pont de ce véhicule, ce qui suppose pour ce roulement des dimensions relativement grandes et en particulier des diamètres intérieur et extérieur relativement grands.

Pour répondre simultanément à ces deux impératifs contradictoires, on donne ici à la douille 5 une forme évasée vers l'extérieur du rotor et relativement allongée, on constitue l'un des deux roulements 19 par un petit roulement, que l'on dispose au voisinage de l'extrémité rétrécie de la douille, et on constitue l'autre roulement 20 par un gros roulement de butée axiale disposé au voisinage de l'extrémité évasée de la douille.

En outre la pièce annulaire 16 présente ici la forme d'un pot dont la paroi latérale présente une forme générale cylindrique et enveloppe l'extrémité étroite de la douille 5, et le petit roulement 19 est disposé axialement à l'intérieur de l'ensemble formé par le pot 16 et par la collerette 15 qui prolonge extérieurement le bord de ce pot.

De la sorte, le centre de gravité du rotor 12-15 se trouve en un point, de l'axe de ce rotor, situé à l'intérieur du petit roulement 20 ou même entre les deux roulements, ce qui assure un support et un centrage excellents de ce rotor malgré l'apparente complication de la construction proposée.

Le gros roulement 20, quant à lui, déborde de préférence axialement au-delà de l'encombrement axial global du rotor.

Le diamètre intérieur du petit roulement 19 est plus petit que celui du gros roulement 20, de sorte que le petit roulement 19 entoure une portion de relativement petit diamètre du bout d'arbre 17 alors que le gros roulement 20 est monté sur une portion épaulée de plus grand diamètre dudit bout d'arbre.

Les deux roulements 19 et 20 sont disposés dans une même poche à graisse 21 délimitée extérieurement par la douille 5 elle-même et intérieurement par une portion du bout d'arbre 17, ladite poche 21 étant en outre étanchée par deux joints d'étanchéité terminaux 22 et 23.

La fixation axiale du pot 16 sur le bout d'arbre 17 est assurée par vissage d'un boulon 24 dans un alésage axial fileté dudit bout d'arbre, vissage qui a pour effet d'appliquer axialement contre ladite pièce 16 le bord d'une plaque circulaire 25 traversée par ledit boulon.

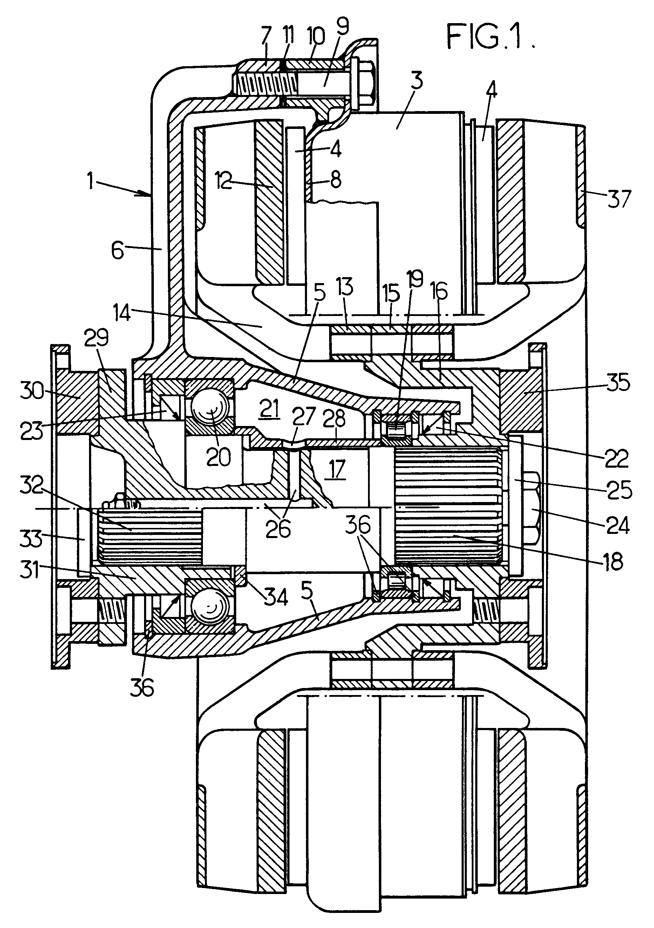

Deux modes de construction distincts sont représentés respectivement en haut et en bas de la partie gauche de la figure 1 et correspondent respectivement à deux modes d'alimentation distincts en graisse de la poche 21.

Dans la réalisation du haut, cette alimentation peut se faire par l'intérieur, à travers des conduits 26 évidés dans le bout d'arbre 17 et une lumière 27 évidée dans une entretoise tubulaire 28 interposée axialement entre les bagues intérieures des deux roulements 19 et 20. Dans ce cas, le bout d'arbre 17 est solidarisé avec une collerette 29 contre laquelle peut être boulonnée une bride d'accouplement 30 faisant partie d'un autre élément de l'arbre de transmission ou facilement raccordable à cet autre élément.

Dans la réalisation du bas, l'alimentation en graisse de la poche 21 peut être effectuée à partir de l'extérieur de la douille 5 à travers une arrivée non représentée. Dans ce dernier cas, le bout d'arbre 17 est raccordé à la bride 30 par l'intermédiaire d'un collier 31 qui est solidarisé angulairement avec lui par des cannelures 32 et axialement par vissage d'un boulon (non représenté) dans un alésage axial fileté du bout d'arbre considéré, vissage ayant pour effet d'appliquer axialement contre le collier 31 le bord d'une plaque circulaire 33 traversée par ledit boulon. Le vissage en question a également pour effet d'appliquer axialement le collier 31 contre la bague interne du roulement de butée 20 et cette bague contre une rondelle 34, elle-même appliquée axialement contre une portion épaulée du bout d'arbre 17, qui remplace ici l'entretoise tubulaire 28.

On voit encore sur la figure 1 :
– une bride 35 d'accouplement boulonnée sur la pièce 16 et faisant partie d'un autre élément de l'arbre de transmission à ralentir, ou facilement raccordable à un tel autre élément,
– des rondelles 36 du type "circlips" logées dans des gorges évidées à l'intérieur de la douille 5 et assurant le positionnement axial des joints d'étanchéité 22,23 et des bagues extérieures des roulements,
– et des jantes annulaires 37 venues de moulage avec les disques 12, leurs bras ailetés 14 et leurs bagues de fixation 13, lesdits anneaux reliant entre elles les crêtes des portions de plus grand diamètre desdits bras de façon à former entre ces portions des canaux pour l'air de ventilation.

Sur la figure 2 on a représenté, en plus de l'ossature 1 et d'un longeron de support 2, les éléments permettant de fixer la première sur la seconde, éléments comprenant :

– quatre portées épaisses 38 évidées par des trous filetés 39 d'axes horizontaux, portées comprises par le cerceau 7 à raison de deux portées superposées pour chacun des deux côtés du cerceau,

– une première console 40 boulonnée sur les deux portées 38 superposées d'un même côté,

– une seconde console 41 rapportée, notamment par boulonnage, sur le longeron 2,

– et un support élastique amortisseur 42 interposé verticalement entre les deux consoles 40 et 41.

Dans un mode de réalisation de l'invention ayant donné toute satisfaction et mentionné à titre purement illustratif, les valeurs suivantes ont été adoptées pour certaines des cotes du ralentisseur :

– diamètre hors tout : environ 60 cm,

– diamètres intérieur et extérieur du petit roulement 19 : 7 et 12 cm,

– diamètres intérieur et extérieur du gros roulement 20 : 9 et 16 cm,

– écartement axial entre les deux roulements : environ 10 cm.

En suite de quoi, et quel que soit le mode de réalisation adopté, on dispose finalement d'un ralentisseur électrique dont la constitution et le fonctionnement résultent suffisamment de ce qui précède.

Ce ralentisseur présente de nombreux avantages par rapport à ceux antérieurement connus.

En particulier le poids du rotor peut être transmis sans fatigue au stator par l'intermédiaire du petit roulement 19 qui se trouve sensiblement au niveau axial de son centre de gravité. En outre, le gros roulement 20 peut être choisi avec des dimensions suffisantes pour absorber correctement les butées axiales du fait que l'on n'est pas limité, au niveau axial de la douille où il se trouve, par des considérations d'encombrement transversal.

Vu l'excellence de cette répartition des différents poids et efforts mis en jeu sur les deux roulements, la formule proposée rend possible l'adoption dans la pratique des constructions de l'art antérieur qui ont été évoquées dans l'introduction de la présente description, constructions présentant en particulier les avantages suivants :

a) Les deux ensembles rotoriques en matériau magnétique moulé constitués chacun par un disque 12, une couronne d'ailettes 14, une bague de fixation 13 et une jante 37, étaient jusqu'ici réservés aux montages, souvent dits du type "Focal", pour lesquels le stator du ralentisseur est monté en porte-à-faux sur le carter du pont ou de la boîte du véhicule alors que son rotor, du type double disque, est monté en porte-à-faux sur le bout d'arbre sortant de ce carter : ces ensembles rotoriques n'étaient pas applicables aux ralentisseurs du type à "autonome", c'est-à-dire comprenant un stator monté entre les longerons du véhicule et un rotor branché entre deux portions courantes de l'arbre de transmission. La même observation peut être faite pour l'ensemble statorique comprenant la couronne de bobines et son anneau de support.

Dans le cas présent, les ensembles rotoriques et statoriques qui viennent d'être définis peuvent être utilisés indifféremment pour les ralentisseurs des deux types puisqu'on trouve dans chacun d'eux, respectivement, une collerette centrale et un cerceau du type de ceux désignés respectivement par les références 15 et 7 ci-dessus, sur lesquels ils peuvent être fixés respectivement par simple boulonnage.

Cet avantage est important en ce qu'il permet des constructions de ralentisseurs en plus grande série et de sensibles réductions des stocks.

b) La douille 5, interposée entre les disques 12 fortement chauffés par les courants de Foucault et les roulements, joue le rôle d'un écran thermique entre ces disques et ces roulements, ce qui évite la surchauffe de ces derniers et de leur lubrifiant.

c) Il est possible de démonter les pièces essentielles du ralentisseur (bobines, ensembles rotoriques) en vue de leur réparation sans pour autant interrompre l'arbre de transmission, ce qui permet de poursuivre l'utilisation du véhicule même dans de telles conditions.

## Revendications

1. Ralentisseur électrique pour véhicule, comprenant un stator inducteur comportant lui-même une couronne de bobines électriques (3) d'axes parallèles à l'axe du ralentisseur, portées par une ossature annulaire (1), et un rotor induit comportant deux disques (12) en matériau magnétique qui encadrent axialement la couronne de bobines et qui sont reliés tous les deux, par des couronnes de bras coudés (14), à une collerette centrale (15) elle-même solidarisée angulairement avec un tronçon (17) de l'arbre de transmission à ralentir du véhicule, l'ossature annulaire comprenant une douille centrale (5) pénétrant dans le rotor, des bras radiaux (6) prolongeant extérieurement cette douille, un anneau (8) porté par ces bras et supportant les bobines, et des portées (38,39) permettant la fixation de l'ossature sur le châssis du véhicule (2), le susdit tronçon d'arbre à ralentir (17) étant monté à l'intérieur de la douille (5) par l'intermédiaire de deux roulements (19,20), caractérisé en ce que la douille (5) présente une allure générale tronconique, en ce que la collerette centrale (15) du rotor est raccordée au tronçon d'arbre (17) par un pot (16) à paroi latérale cylindrique coiffant l'extrémité étroite de la douille et en ce que les deux roulements logés dans cette douille sont un roulement relativement petit (19) disposé au voisinage de ladite extrémité étroite de la douille, à l'intérieur de l'ensemble pot (16)-collerette (15), et un roulement relativement gros (20) propre à encaisser les efforts axiaux et disposé au voisinage de l'extrémité évasée de la douille.

2. Ralentisseur selon la revendication 1, caractérisé en ce que le gros roulement (20) fait saillie axialement au-delà de l'encombrement axial du rotor.

3. Ralentisseur selon l'une quelconque des précédentes revendications, caractérisé en ce que les deux roulements (19,20) sont disposés dans une même poche à graisse (21) fermée par deux joints d'étanchéité (22,23) montés dans les deux extrémités de la douille.


**Patentansprüche**

1. Elektrische Bremse für Fahrzeuge, mit einem induzierenden Stator, der seinerseits einen Kranz von elektrischen Spulen (3) aufweist, deren Achsen parallel zur Achse der Bremse sind und die von einem ringförmigen Träger (1) getragen werden, und einem induzierten Rotor, der zwei Scheiben (12) aus magnetischem Material aufweist, welche den Spulenkranz axial umfassen und die beide durch Kränze aus gekröpften Armen (14) mit einem zentralen Flansch (15) verbunden sind, der seinerseits winkelmäßig mit einem Abschnitt (17) der zu bremsenden Welle des Fahrzeuges verbunden ist, wobei der ringförmige Träger eine zentrale Buchse (5), die in den Rotor eindringt, Radialarme (6), welche die Buchse nach außen verlängern, einen Ring (8), der von den Armen getragen ist und die Spulen abstützt, sowie Lager (38, 39) aufweist, welche die Befestigung des Trägers am Fahrzeugchassis (2) ermöglichen, wobei der erwähnte Abschnitt der zu bremsenden Welle (17) im Inneren der Buchse (5) mittels zweier Wälzlager (19, 20) gelagert ist, dadurch gekennzeichnet, daß die Buchse (5) eine im allgemeinen kegelstumpfförmige Form hat, daß der zentrale Flansch (15) des Rotors an den Wellenabschnitt (17) über einen Topf (16) angeschlossen ist, der eine zylindrische Seitenwand aufweist, welche das engere Ende der Buchse umschließt, und daß die beiden, in der Buchse gelagerten Wälzlager durch ein relativ kleines Wälzlager (19), das in der Nähe des engeren Endes der Buchse im Inneren der Anordnung Topf (16) - Kragen (15) angeordnet ist, und ein relativ schweres Wälzlager (20) gebildet sind, welches die Axialkräfte aufnimmt und in der Nähe des weiteren Endes der Buchse sitzt.

2. Bremse nach Anspruch 1, dadurch gekennzeichnet, daß das schwere Wälzlager (20) über die Axialerstreckung des Rotors axial vorsteht.

3. Bremse nach einem der vorhergehenden Ansprüche, dadurch gekennzeichnet, daß die beiden Wälzlager (19, 20) in ein und derselben Fettasche (21) sitzen, die durch zwei Dichtungen (22, 23) verschlossen ist, welche an den Enden der Buchse angeordnet sind.


**Claims**

1. Electric retarder for vehicle, comprising an inductor stator itself comprising a ring of electric coils (3) with axes parallel to the axis of the retarder, supported by an annular framework (1), and an armature rotor comprising two magnetic material disks (12) which axially enclose the ring of coils and which are both connected, through rings of bent arms (14), to a central collar (15) itself connected angularly with a section (17) of the transmission shaft to be retarded of the vehicle, the annular framework including a central socket (5) penetrating into the rotor, radial arms (6) extending this socket externally, a ring (8) carried by these arms and supporting the coils, and bearing surfaces (38, 39) for fixing the framework on the chassis of the vehicle (2), said shaft section to be slowed down (17) being mounted inside the socket (5) by means of two bearings (19, 20), characterized in that the socket (5) has a general truncated cone shape, in that the central collar (15) of the rotor is connected to the shaft section (17) by means of a pot (16) with cylindrical side wall covering the narrow end of the socket and in that the two bearings housed in this socket are a relatively small bearing (19) disposed in the vicinity of said narrow end of the socket, inside the pot (16)-collar (15) assembly, and a relatively large bearing (20) adapted for absorbing the axial forces and disposed in the vicinity of the widened end of the socket.

2. Retarder according to claim 1, characterized in that the large bearing (20) projects axially beyond the axial dimension of the rotor.

3. Retarder according to any one of the preceding claims, characterized in that the two bearings (19, 20) are disposed in the same grease housing (21) closed by two seals (22, 23) mounted in both ends of the socket.

FIG.1.

FIG.2.

EP 0 282 375 B1